(19) Europäisches Patentamt
European Patent Office
Office européen des brevets

(11) EP 3 859 752 A1

(12) EUROPEAN PATENT APPLICATION
published in accordance with Art. 153(4) EPC

(43) Date of publication:
04.08.2021 Bulletin 2021/31

(51) Int Cl.:
H01B 3/44 (2006.01)    C08L 23/10 (2006.01)
C08L 23/16 (2006.01)    H01B 7/02 (2006.01)

(21) Application number: 20762639.1

(22) Date of filing: 25.02.2020

(86) International application number:
PCT/KR2020/002656

(87) International publication number:
WO 2020/175875 (03.09.2020 Gazette 2020/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.02.2019 KR 20190022254
24.02.2020 KR 20200022405

(71) Applicant: LS Cable & System Ltd.
Anyang-si, Gyeonggi-do 14119 (KR)

(72) Inventors:
• SHIN, Jung In
Hwaseong-si Gyeonggi-do 18357 (KR)
• NAM, Gi Joon
Seoul 06510 (KR)
• CHO, Young Eun
Seoul 07982 (KR)
• SON, Sue Jin
Anyang-si Gyeonggi-do 14126 (KR)
• SHIN, Yeo Ool
Seoul 02256 (KR)

(74) Representative: advotec.
Patent- und Rechtsanwaltspartnerschaft
Tappe mbB
Widenmayerstraße 4
80538 München (DE)

(54) INSULATOR AND POWER CABLE COMPRISING SAME

(57) Provided is an insulator that is environmentally friendly and has high heat resistance and mechanical strength and excellent flexibility, bendability, impact resistance, cold resistance, installability, workability, etc., which are in a trade-off relationship with the physical properties; and a power cable having the insulator.

Fig. 3

EP 3 859 752 A1

## Description

TECHNICAL FIELD

The present invention relates to an insulator and a power cable having the same. Specifically, the present invention relates to an insulator that is environmentally friendly and has high heat resistance and mechanical strength and excellent flexibility, bendability, impact resistance, cold resistance, installability, workability, etc., which are in a trade-off relationship with the physical properties; and a power cable having the insulator.

BACKGROUND ART

In general, a power cable has a conductor and an insulating layer covering the conductor and formed of an insulator. Particularly, a high-voltage or ultra-high-voltage power cable may further comprise an inner semiconducting layer between the conductor and the insulating layer, an outer semiconducting layer covering the insulating layer, a sheath layer covering the outer semiconducting layer, and the like.

In recent years, as the demand for electrical power has increased, the development of high-capacity cables has been required. To this end, an insulator for forming an insulating layer having excellent mechanical and electrical properties is needed.

Generally, polyolefin polymer, such as polyethylene, ethylene/propylene elastic copolymer (EPR), or ethylene/propylene/diene copolymer (EPDM), is cross-linked and used as a base resin of the insulator. This is because such a cross-linked resin maintains excellent flexibility and satisfactory electrical and mechanical strength even at high temperatures.

However, cross-linked polyethylene (XLPE) or the like used as the base resin of the insulator is in a cross-linked form, and thus, when the lifetime of a cable or the like comprising an insulating layer formed of a resin such as XLPE ends, the resin of the insulating layer cannot be recycled and should be discarded by incineration and thus is not environmentally friendly.

When polyvinyl chloride (PVC) is used as a material of a sheath layer, PVC is difficult to separate from the cross-linked polyethylene (XLPE) which is the material of the insulating layer or the like and is not environmentally friendly because toxic chlorinated substances are generated during incineration.

Non-cross-linked high-density polyethylene (HDPE) or low-density polyethylene (LDPE) is environmentally friendly because when the lifetime of a cable comprising an insulating layer formed thereof ends, a resin of the insulating layer is recyclable but is inferior to XLPE in terms heat resistance and thus is of limited use due to low operating temperatures thereof.

It may be considered to use polypropylene resin as a base resin, because a polymer thereof has a melting point of 160 °C or higher and thus the polypropylene resin is excellent in heat resistance without being cross-linked. However, the polypropylene resin has insufficient flexibility, bendability and the like due to high rigidity thereof, and thus has low workability during laying of a cable comprising an insulating layer formed thereof and is of limited use.

Therefore, there is an urgent need for an insulator which is environmentally friendly, is inexpensive to manufacture, and satisfies not only heat resistance and mechanical strength but also flexibility, bendability, impact resistance, cold resistance, installability, workability, etc., which are in a trade-off relationship with heat resistance and mechanical strength; and a power cable having the insulator.

DETAILED DESCRIPTION OF THE INVENTION

TECHNICAL PROBLEM

The present invention is directed to providing an eco-friendly insulator and a power cable having the same.

The present invention is also directed to providing an insulator which satisfies not only heat resistance and mechanical strength but also flexibility, bendability, impact resistance, cold resistance, installability, workability, etc., which are in a trade-off relationship with heat resistance and mechanical strength; and a power cable having the insulator.

TECHNICAL SOLUTION

According to an aspect of the present invention, provided is an insulator, which is formed of an insulating composition comprising heterophasic polypropylene resin, wherein a peak ratio change rate thereof as expressed in the following Equation 2 is in a range of -50 to 50%, the peak ratio change rate being a rate of change of a peak ratio before/after aging, defined in the following Equation 1:

[Equation 1]

$$peak\ ratio = \frac{absorption\ rate\ peak\ value\ at\ wave\ number\ of\ crystalline\ portion}{absorption\ rate\ peak\ value\ at\ wave\ number\ of\ amorphous\ portion},$$

wherein absorption rate peak value at wave number of crystalline portion represents a peak value of an absorption rate at 992 to 1002 cm$^{-1}$, which is a wave number of a crystalline portion of the insulator, when an Fourier-transform infrared spectroscopy (FT-IR) analysis is performed on the insulator, and

absorption rate peak value at wave number of amorphous portion represents a peak value of an absorption rate at 969 to 979 cm$^{-1}$, which is a wave number of an amorphous portion of the insulator, when the FT-IR analysis is performed on the insulator, and

[Equation 2]

$$peak\ ratio\ change\ rate\ (\%) = \frac{peak\ ratio\ at\ room\ temperature - peak\ ratio\ after\ aging}{peak\ ratio\ at\ room\ temperature} \times 100,$$

wherein peak ratio at room temperature represents a peak ratio of a sample of the insulator measured at room temperature, and peak ratio after aging represents a peak ratio measured after aging the sample of the insulator in a convection oven at 136 °C for ten days.

According to another aspect of the present invention, provided is the insulator, wherein the peak ratio change rate (%) is in a range of -35 to 35%.

According to other aspect of the present invention, provided is the insulator, wherein the peak ratio change rate (%) is in a range of -20 to 20%.

According to other aspect of the present invention, provided is the insulator, wherein the insulator has a flexural modulus of 50 to 1,200 MPa measured at room temperature according to the ASTM D790 standard.

According to other aspect of the present invention, provided is the insulator, wherein a tensile strength change rate of the insulator as expressed in the following Equation 3 is in a range of -25 to 25%, the tensile strength change rate being a rate of change of tensile strength measured before/after aging according to the KS C IEC 60811-501 standard:

[Equation 3]

$$tensile\ strength\ change\ rate\ (\%) =$$

$$\frac{tensile\ strength\ at\ room\ temperature - tensile\ strength\ after\ aging}{tensile\ strength\ at\ room\ temperature} \times 100,$$

wherein tensile strength at room temperature represents tensile strength of the sample of the insulator measured at room temperature, and

tensile strength after aging represents tensile strength measured after aging the sample of the insulator in a convection oven at 136 °C for ten days.

According to other aspect of the present invention, provided is the insulator, wherein the tensile strength change rate is in a range of -20 to 20%.

According to other aspect of the present invention, provided is the insulator, wherein a rate of change of elongation of the insulator as expressed in the following Equation 4 is in a range of -25 to 25%, the rate of change of elongation being measured before/after aging according to the KS C IEC 60811-501 standard:

[Equation 4]

$$elongation\ change\ rate\ (\%) = \frac{elongation\ at\ room\ temperature - elongation\ after\ aging}{elongation\ at\ room\ temperature} \times 100,$$

wherein elongation at room temperature represents elongation of the sample of the insulator measured at room temperature, and elongation after aging represents elongation measured after aging the sample of the insulator in the convection oven at 136 °C for ten days.

According to other aspect of the present invention, provided is the insulator, wherein the elongation change rate is in a range of -20 to 20%.

According to other aspect of the present invention, provided is the insulator, wherein the heterophasic polypropylene resin comprises rubbery propylene copolymer dispersed in a crystalline polypropylene matrix.

According to other aspect of the present invention, provided is the insulator, wherein the crystalline polypropylene matrix comprises at least one of a propylene homopolymer and a propylene copolymer.

According to other aspect of the present invention, provided is the insulator, wherein the rubbery propylene copolymer comprises at least one comonomer selected from the group consisting of ethylene and $C_{4-12}$ alpha-olefins such as 1-butene, 1-pentene, 4-methyl-1-pentene, 1-hexene, 1-heptene, 1-octene, and the like.

According to other aspect of the present invention, provided is a power cable comprising a conductor and an insulating layer covering the conductor, wherein the insulating layer comprises the insulator.

ADVANTAGEOUS EFFECTS

An insulator according to the present invention comprises a non-cross-linked propylene polymer and thus is environmentally friendly, and not only excellent heat resistance and mechanical strength but also excellent flexibility, bendability, impact resistance, cold resistance, installation, workability and the like, which are in a trade-off relationship with heat resistance and mechanical strength, can be achieved by accurately controlling a rate of change of a specific peak ratio for an insulating-layer sample formed of the insulator.

DESCRIPTION OF THE DRAWINGS

FIG. 1 is a schematic cross-sectional view of a power cable according to an embodiment of the present invention.
FIG. 2 is a schematic view of a longitudinal section of the power cable of FIG. 1.
FIG. 3 is a graph showing a result of analyzing an insulator sample of Example 1 of the present invention by infrared spectroscopy.

MODE OF THE INVENTION

Hereinafter, exemplary embodiments of the present invention will be described in detail. The present invention is, however, not limited thereto and may be embodied in many different forms. Rather, the embodiments set forth herein are provided so that this disclosure may be thorough and complete and fully convey the scope of the invention to those skilled in the art. Throughout the specification, the same reference numbers represent the same elements.

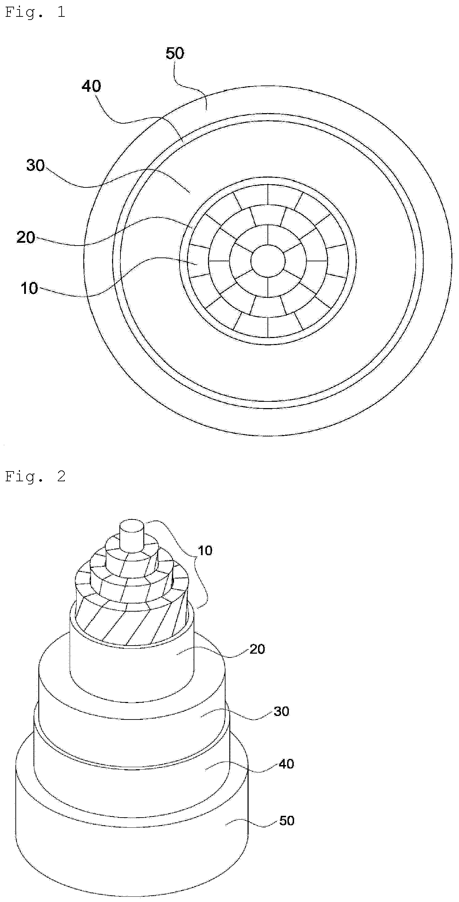

FIGS. 1 and 2 illustrate a cross section and a longitudinal section of a power cable according to an embodiment of the present invention, respectively.

As illustrated in FIGS. 1 and 2, the power cable according to the present invention may comprise a conductor 10 formed of a conductive material such as copper or aluminum, an insulating layer 30 covering the conductor 10 and formed of an insulating polymer or the like, an inner semiconducting layer 20 covering the conductor 10 and configured to remove an air layer between the conductor 10 and the insulating layer 30 and reduce local electric-field concentration, an outer semiconducting layer 40 configured to shield the power cable and cause a uniform electric field to be applied to the insulating layer 30, a sheath layer 50 configured to protect the power cable, and the like.

Specifications of the conductor 10, the insulating layer 30, the semiconducting layers 20 and 40, the sheath layer 50, and the like may vary according to a purpose of the power cable, a transmission voltage or the like, and materials of the insulating layer 30, the semiconducting layers 20 and 40, and the sheath layer 50 may be the same or different.

The conductor 10 may be formed by twisting a plurality of stranded wires to improve flexibility, bendability, installability, workability, etc. of the power cable, and particularly comprise a plurality of conductor layers formed by arranging a plurality of stranded wires in a circumferential direction of the conductor 10.

The insulating layer 30 of the power cable according to the invention may be formed of an insulator comprising a polypropylene copolymer, e.g., a heterophasic polypropylene containing two or more phases (specifically, a crystalline resin and a rubbery resin), and particularly, an a non-cross-linked thermoplastic resin containing heterophasic polypropylene resin in which a rubbery propylene copolymer is dispersed in a crystalline polypropylene matrix.

Here, the crystalline polypropylene matrix may comprise a propylene homopolymer and/or a propylene copolymer, preferably a propylene homopolymer, and more preferably only a propylene homopolymer. The propylene homopolymer refers to polypropylene formed by polymerization of propylene contained in an amount of 99 wt% or more and preferably an amount of 99.5 wt% or more, based on the total weight of monomers.

The crystalline polypropylene matrix Here, the term "metallocene" is a generic term for bis(cyclopentadienyl) metal which is a new organometallic compound in which cyclopentadiene and a transition metal are combined in a sandwich structure, and a simplest general formula is $M(C_5H_5)_2$ (here, M is Ti, V, Cr, Fe, Co, Ni, Ru, Zr, Hf or the like). The polypropylene polymerized in the presence of the metallocene catalyst has a low catalyst residual amount of about 200 to 700 ppm and thus my suppress or minimize a decrease in electrical properties of the insulator containing polypropylene due to the catalyst residual amount.

The rubbery propylene copolymer dispersed in the crystalline polypropylene matrix is substantially amorphous. The rubbery propylene copolymer may comprise at least one comonomer selected from the group consisting of ethylene and $C_{4-12}$ alpha-olefins such as 1-butene, 1-pentene, 4-methyl-1-pentene, 1-hexene, 1-heptene, or 1-octene.

The rubbery propylene copolymer may be monomeric propylene-ethylene rubber (PER) or propylene-ethylene diene rubber (EPDM).

In the present invention, the rubbery propylene copolymer may have a micro or nano particle size. The particle size of the rubbery propylene copolymer may ensure uniform dispersion of the rubbery propylene copolymer in the crystalline polypropylene matrix and improve impact strength of the insulating layer comprising the rubbery propylene copolymer. In addition, a risk of cracks initiated by particles thereof may reduce and a possibility that propagation of already formed cracks will stop may increase due to the particle size of the rubbery propylene copolymer.

Because the heterophasic polypropylene resin has a high melting point in spite of the non-cross-linked form thereof, the heterophasic polypropylene resin exhibits sufficient heat resistance to provide a power cable with an improved continuous workable temperature range and is recyclable due to a non-cross-linked form thereof and thus environmentally friendly. In contrast, a general cross-linked resin is difficult to be recycled and thus is not environmentally friendly, and does not guarantee uniform productivity when crosslinking or scorch occurs early during formation of the insulating layer 30, thereby reducing long-term extrudability.

In the present invention, the insulator used to form the insulating layer 30 may further comprise a nucleating agent. The nucleating agent may be a sorbitol-based nucleating agent. That is, the nucleating agent is a sorbitol-based nucleating agent, for example, 1,3:2,4-bis(3,4-dimethyldibenzylidene) sorbitol, bis(p-methyldibenzulidene) sorbitol, substituted dibenzylidene sorbitol, or a mixture thereof.

Due to the nucleating agent, curing of the non-cross-linked thermoplastic resin may be promoted even when not quenched in an extrusion process of the power cable, thus improving productivity of the power cable, a size of crystals generated during the curing of the non-cross-linked thermoplastic resin may be reduced to preferably 1 to 10 $\mu$m, thereby improving electrical properties of an insulating layer to be formed, and a plurality of crystallization sites of the crystals may be formed to increase crystallinity, thereby simultaneously improving heat resistance and mechanical strength of the insulating layer.

Because a melting point of the nucleating agent is high, the nucleating agent should be injected and extruded at a high temperature of about 230 °C and it is preferable to use a combination of two or more sorbitol-based nucleating agents. When a combination of two or more different sorbitol-based nucleating agents are used, the expression of nucleating agents may be increased even at low temperatures.

The nucleating agent may be contained in an amount of 0.1 to 0.5 parts by weight, based on 100 parts by weight of the non-cross-linked thermoplastic resin. When the amount of the nucleating agent is less than 0.1 parts by weight, the heat resistance and electrical and mechanical strength of the non-cross-linked thermoplastic resin and the insulating layer comprising the same may reduce due to a large crystal size, e.g., a crystal size exceeding 10 $\mu$m and a non-uniform crystal distribution. When the amount of the nucleating agent is greater than 0.5 parts by weight, a surface interface area between the crystals and an amorphous portion of the resin may increase due to an extremely small crystal size, e.g., a crystal size of less than 1 $\mu$m, and thus, alternating-current (AC) dielectric breakdown (ACBD) characteristics, impulse characteristics, etc. of the non-cross-linked thermoplastic resin may decrease.

In the present invention, the insulator used to form the insulating layer 30 may further comprise insulating oil.

Mineral oil, synthetic oil, or the like may be used as the insulating oil. In particular, the insulating oil may be an aromatic oil composed of an aromatic hydrocarbon compound such as dibenzyl toluene, alkylbenzene, or alkyldiphenylethane, a paraffinic oil composed of a paraffinic hydrocarbon compound, a naphthenic oil composed of a naphthenic hydrocarbon compound, silicone oil, or the like.

The insulating oil may be contained in an amount of 1 to 10 parts by weight and preferably 1 to 7.5 parts by weight, based on 100 parts by weight of the non-cross-linked thermoplastic resin. When the amount of the insulating oil is greater than 10 parts by weight, elution of the insulating oil may occur during extrusion of the insulating layer 30 on the conductor 10, thus making it difficult to process the power cable.

As described above, due to the insulating oil, flexibility, bendability, etc. of the insulating layer 30 in which polypropylene rein having relatively low flexibility due to high rigidity is employed as a base resin may be additionally improved, thereby facilitating laying of the power cable, and high heat resistance and mechanical and electrical properties of the polypropylene resin may be maintained or improved. Particularly, a reduction of processability of the polypropylene resin due to a slightly narrow molecular weight distribution when polymerized in the presence of a metallocene catalyst may be supplemented due to the insulating oil.

In the present invention, a flexural modulus of the insulator, which is used to form the insulating layer 30, at room temperature (when measured according to the ASTM D790 standard) may be in a range of 50 to 1,200 MPa, and preferably, a range of 200 to 1,000 MPa.

Here, the flexural modulus may be measured according to the ASTM D790 standard by placing a cuboid insulator sample on two supports and measuring a load applied when surface rupture occurs in the insulator sample or when a deformation rate of the insulator sample is 5.0% while applying a load to a midpoint on the insulator sample on the two supports. The heat resistance, mechanical properties, etc. of the insulating layer 30 may be insufficient when the flexural modulus of the insulator sample at room temperature is less than 50 MPa, and the flexibility, cold resistance, installability, workability, etc. thereof may significantly reduce when the flexural modulus of the insulator sample at the room temperature is greater than 1,200 MPa.

The present inventors have completed the present invention by experimentally confirming that as a result of analyzing the insulator sample by infrared spectroscopy (FT-IR) after/before aging, the heat resistance, mechanical properties, flexibility, cold resistance, installibility, workability, etc. of the insulator sample changed according to a rate of change of a peak ratio, which is a ratio of peak values of an absorption rate at wave numbers representing crystalline portion and an amorphous portion of the insulator sample, before/after aging, and all excellent heat resistance and mechanical properties and excellent physical properties such as flexibility, cold resistance, installibility, workability, etc., which are in a trade-off relationship with heat resistance and mechanical properties, were achieved when the rate of change of the peak-ratio was within a specific range.

The peak ratio, which is the ratio of the peak values of the absorption rate at the wave numbers representing the crystalline portion and the amorphous portion of the insulator sample, and the rate of change of the peak ratio before/after aging are adjustable according to a manufacturing process of an insulating layer from which an insulator sample is collected, and particularly, the type of monomers of a resin, the number of monomers of each type of monomers, an arrangement and structure of the monomers, a polymerization catalyst of the resin, an extrusion speed, an extrusion temperature, a cooling temperature, a cooling rate, and the like.

The peak ratio may be defined by Equation 1 below.

[Equation 1]

$$peak\ ratio = \frac{absorption\ rate\ peak\ value\ at\ wave\ number\ of\ crystalline\ portion}{absorption\ rate\ peak\ value\ at\ wave\ number\ of\ amorphous\ portion}$$

In Equation 1 above, "absorption rate peak value at wave number of crystalline portion" is a peak value of an absorption rate at 992 to 1002 cm$^{-1}$, which is a wave number of a crystalline portion of the insulator, when the FT-IR analysis is performed on the insulator, and "absorption rate peak value at wave number of amorphous portion" is a peak value of an absorption rate at 969 to 979 cm$^{-1}$, which is a wave number of an amorphous portion of the insulator, when the FT-IR analysis is performed on the insulator.

Here, the wave number refers to a magnitude of a phase that changes per unit length of a wave.

The rate of change of the peak ratio before/after aging of the insulator may be defined by Equation 2 below.

[Equation 2]

$$peak\ ratio\ change\ rate\ (\%)$$
$$= \frac{peak\ ratio\ at\ room\ temperature - peak\ ratio\ after\ aging}{peak\ ratio\ at\ room\ temperature} \times 100$$

In Equation 2 above, "peak ratio at room temperature" is a peak ratio of the insulator when measured at room temperature, and "peak ratio after aging" is a peak ratio measured after aging the insulator in a convection oven at 136 °C for ten days.

In the present invention, the peak ratio change rate may be in a range of -50 to 50%, preferably, a range of -35 to 35%, and more preferably, a range of -20 to 20%. When the peak ratio change rate is less than -50% or greater than 50%, a degree of movement between the crystalline portion and the amorphous portion of the insulator during aging of the insulator may be excessive, thus resulting in an unstable state, thereby preventing achievement of all excellent heat resistance and mechanical properties and excellent physical properties such as flexibility, cold resistance, installibility, workability, etc., which are in a trade-off relationship with heat resistance and mechanical properties.

Accordingly, tensile strength and elongation of an insulator sample according to the present invention were respectively 1.275 kg/mm$^2$ or more and 200% or more when measured at room temperature according to the KS C IEC 60811-501 standard, and rates of change thereof were in a range of -25 to 25%, and preferably, a range of -20 to 20% when measured after aging the sample in a convection oven or the like at 136 °C for ten days. Thus, stable heat resistance and mechanical properties were achieved.

[Examples]

Two cable samples were prepared by extruding insulators, which were manufactured using different ratios of monomers and different manufacturing processes and thus rates of change of peak ratio thereof before/after aging were different, onto a conductor, insulator samples having a thickness of 1 mm were collected from insulating layers of the cable samples, and tensile strength and elongation of each of the insulator samples were measured at room temperature and measured again after aging the insulator samples in a convection oven at 136 °C for ten days. Here, the insulator samples may be obtained by pressing an insulating composition at a high temperature to produce samples having a thickness of 1 mm.

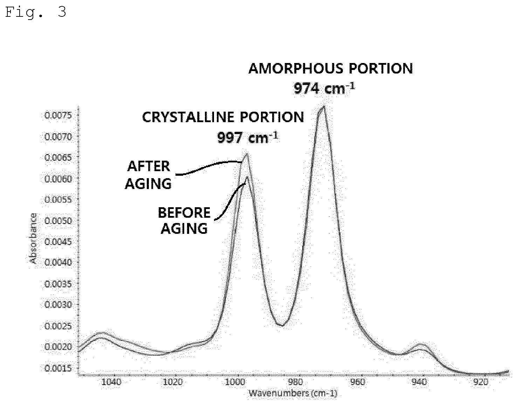

The results of the measurement are as shown in Table 1 below and FIG. 3 illustrating Example #1.

[Table 1]

| | | Example #1 | Example #2 | Example #3 | Example #4 | Comparative example #1 | Comparative example #2 |
|---|---|---|---|---|---|---|---|
| peak ratio (at room temperature) | | 0.78 | 0.73 | 0.63 | 0.56 | 0.42 | 0.48 |
| peak ratio (after aging) | | 0.81 | 0.78 | 0.74 | 0.75 | 0.65 | 0.80 |
| peak ratio change rate (%) | | -3.85 | -6.85 | -17.46 | -33.93 | -54.76 | -66.67 |
| room temperature | tensile strength (Kgf/mm$^2$) | 2.76 | 2.49 | 1.88 | 1. 97 | 2.43 | 2.12 |
| | elongation (%) | 741.99 | 743.24 | 577.02 | 545.54 | 587.32 | 530.23 |
| aging(136°C X 240 h) | tensile strength (Kgf/mm$^2$) | 2.73 | 2.25 | 1. 92 | 2.37 | 3.07 | 2.78 |
| | elongation (%) | 598.09 | 599.39 | 501.23 | 541.67 | 437.76 | 380.46 |
| tensile strength change rate (%) | | 1.09 | 9.64 | -2.13 | -20.30 | -26.34 | -31.13 |
| elongation change rate (%) | | 19.39 | 19.35 | 13.13 | 0.71 | 25.46 | 28.25 |

As shown in Table 1 above, it was confirmed that states of the insulator samples of the present invention were maintained constant due to a low peak ratio change rate before/after aging and thus a rate of change of mechanical properties of the insulator sample before/after aging was controlled to be low, thus achieving excellent heat resistance and mechanical properties and excellent flexibility, cold resistance, installibility, workability, etc., which are in a trade-off relationship with heat resistance and mechanical properties.

In contrast, it was confirmed that peak ratio change rates of the insulator samples of comparative examples #1 and #2 before/after aging were beyond a range of ±50% and thus the states of the insulator samples were unstable, thus greatly reducing the heat resistance thereof and causing the mechanical properties thereof to be unstable.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

**Claims**

1. An insulator, which is formed of an insulating composition comprising heterophasic polypropylene resin, wherein a peak ratio change rate thereof as expressed in the following Equation 2 is in a range of -50 to 50%, the peak ratio change rate being a rate of change of a peak ratio before/after aging, defined in the following Equation 1:

   [Equation 1]

   $$peak\ ratio = \frac{absorption\ rate\ peak\ value\ at\ wave\ number\ of\ crystalline\ portion}{absorption\ rate\ peak\ value\ at\ wave\ number\ of\ amorphous\ portion},$$

   wherein absorption rate peak value at wave number of crystalline portion represents a peak value of an absorption rate at 992 to 1002 cm$^{-1}$, which is a wave number of a crystalline portion of the insulator, when an Fourier-transform infrared spectroscopy (FT-IR) analysis is performed on the insulator, and
   absorption rate peak value at wave number of amorphous portion represents a peak value of an absorption rate at 969 to 979 cm$^{-1}$, which is a wave number of an amorphous portion of the insulator, when the FT-IR analysis is performed on the insulator, and

   [Equation 2]

   $$peak\ ratio\ change\ rate\ (\%) = \frac{peak\ ratio\ at\ room\ temperature - peak\ ratio\ after\ aging}{peak\ ratio\ at\ room\ temperature} \times 100,$$

   wherein peak ratio at room temperature represents a peak ratio of a sample of the insulator measured at room temperature, and peak ratio after aging represents a peak ratio measured after aging the sample of the insulator in a convection oven at 136 °C for ten days.

2. The insulator of claim 1, wherein the peak ratio change rate (%) is in a range of -35 to 35%.

3. The insulator of claim 2, wherein the peak ratio change rate (%) is in a range of -20 to 20%.

4. The insulator any one of claims 1 to 3, wherein the insulator has a flexural modulus of 50 to 1,200 MPa measured at room temperature according to the ASTM D790 standard.

5. The insulator any one of claims 1 to 3, wherein a tensile strength change rate of the insulator as expressed in the following Equation 3 is in a range of -25 to 25%, the tensile strength change rate being a rate of change of tensile strength measured before/after aging according to the KS C IEC 60811-501 standard:

   [Equation 3]

   $$tensile\ strength\ change\ rate\ (\%) =$$

   $$\frac{tensile\ strength\ at\ room\ temperature - tensile\ strength\ after\ aging}{tensile\ strength\ at\ room\ temperature} \times 100,$$

wherein tensile strength at room temperature represents tensile strength of the sample of the insulator measured at room temperature, and
tensile strength after aging represents tensile strength measured after aging the sample of the insulator in a convection oven at 136 °C for ten days.

6. The insulator of claim 5, wherein the tensile strength change rate is in a range of -20 to 20%.

7. The insulator any one of claims 1 to 3, wherein a rate of change of elongation of the insulator as expressed in the following Equation 4 is in a range of -25 to 25%, the rate of change of elongation being measured before/after aging according to the KS C IEC 60811-501 standard:

[Equation 4]

$$elongation\ change\ rate\ (\%) = \frac{elongation\ at\ room\ temperature - elongation\ after\ aging}{elongation\ at\ room\ temperature} \times 100,$$

wherein elongation at room temperature represents elongation of the sample of the insulator measured at room temperature, and elongation after aging represents elongation measured after aging the sample of the insulator in the convection oven at 136 °C for ten days.

8. The insulator of claim 7, wherein the elongation change rate is in a range of -20 to 20%.

9. The insulator any one of claims 1 to 3, wherein the heterophasic polypropylene resin comprises rubbery propylene copolymer dispersed in a crystalline polypropylene matrix.

10. The insulator of claim 9, wherein the crystalline polypropylene matrix comprises at least one of a propylene homopolymer and a propylene copolymer.

11. The insulator of claim 9, wherein the rubbery propylene copolymer comprises at least one comonomer selected from the group consisting of ethylene and $C_{4-12}$ alpha-olefins such as 1-butene, 1-pentene, 4-methyl-1-pentene, 1-hexene, 1-heptene, 1-octene, and the like.

12. A power cable comprising a conductor and an insulating layer covering the conductor, wherein the insulating layer comprises the insulator of any one of claims 1 to 3.

Fig. 1

Fig. 2

Fig. 3

## INTERNATIONAL SEARCH REPORT

| International application No. |
| --- |
| **PCT/KR2020/002656** |

### A. CLASSIFICATION OF SUBJECT MATTER

*H01B 3/44(2006.01)i, C08L 23/10(2006.01)i, C08L 23/16(2006.01)i, H01B 7/02(2006.01)i*

According to International Patent Classification (IPC) or to both national classification and IPC

### B. FIELDS SEARCHED

Minimum documentation searched (classification system followed by classification symbols)
H01B 3/44; C08L 23/10; C08L 23/14; C08L 23/16; H01B 13/00; H01B 3/00; H01B 3/30; H01B 9/00; H01B 9/02; H01B 7/02

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: insulator, polypropylene, cable, hetero

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2018-0001993 A (LS CABLE & SYSTEM LTD.) 05 January 2018 See claims 1, 6-9; paragraphs [0001], [0076]-[0078]. | 1-12 |
| A | KR 10-2014-0102407 A (LS CABLE & SYSTEM LTD.) 22 August 2014 See claim 1; paragraph [0040]. | 1-12 |
| A | KR 10-2018-0056875 A (LS CABLE & SYSTEM LTD.) 30 May 2018 See the entire document. | 1-12 |
| A | KR 10-2009-0032146 A (MITSUI CHEMICALS, INC.) 31 March 2009 See the entire document. | 1-12 |
| A | KR 10-2012-0061980 A (BOREALIS AG.) 13 June 2012 See the entire document. | 1-12 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 JUNE 2020 (12.06.2020) | **12 JUNE 2020 (12.06.2020)** |
| Name and mailing address of the ISA/KR<br>Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Authorized officer<br><br>Telephone No. |

Form PCT/ISA/210 (second sheet) (January 2015)

INTERNATIONAL SEARCH REPORT
Information on patent family members

International application No.

**PCT/KR2020/002656**

| Patent document cited in search report | Publication date | Patent family member | Publication date |
|---|---|---|---|
| KR 10-2018-0001993 A | 05/01/2018 | EP 3477662 A1 | 01/05/2019 |
| | | WO 2018-004210 A1 | 04/01/2018 |
| KR 10-2014-0102407 A | 22/08/2014 | KR 10-2003567 B1 | 24/07/2019 |
| | | WO 2014-126404 A1 | 21/08/2014 |
| KR 10-2018-0056875 A | 30/05/2018 | EP 3544026 A1 | 25/09/2019 |
| | | WO 2018-093074 A1 | 24/05/2018 |
| KR 10-2009-0032146 A | 31/03/2009 | CN 101065438 A | 31/10/2007 |
| | | CN 102627803 A | 08/08/2012 |
| | | CN 104045912 A | 17/09/2014 |
| | | CN 104085160 A | 08/10/2014 |
| | | CN 104086900 A | 08/10/2014 |
| | | CN 104086901 A | 08/10/2014 |
| | | EP 1820821 A1 | 22/08/2007 |
| | | EP 2246390 A1 | 03/11/2010 |
| | | EP 2248848 A1 | 10/11/2010 |
| | | EP 2248852 A1 | 10/11/2010 |
| | | EP 2402392 A1 | 04/01/2012 |
| | | EP 2402393 A1 | 04/01/2012 |
| | | JP 2012-229442 A | 22/11/2012 |
| | | JP 2012-229443 A | 22/11/2012 |
| | | JP 2012-229444 A | 22/11/2012 |
| | | JP 2012-229445 A | 22/11/2012 |
| | | JP 2013-007045 A | 10/01/2013 |
| | | JP 2013-010960 A | 17/01/2013 |
| | | JP 2013-234334 A | 21/11/2013 |
| | | JP 2013-256670 A | 26/12/2013 |
| | | JP 5291291 B2 | 18/09/2013 |
| | | JP 5296907 B2 | 25/09/2013 |
| | | JP 5543550 B2 | 09/07/2014 |
| | | JP 5543551 B2 | 09/07/2014 |
| | | JP 5543552 B2 | 09/07/2014 |
| | | JP 5543553 B2 | 09/07/2014 |
| | | JP 5602805 B2 | 08/10/2014 |
| | | JP 5657757 B2 | 21/01/2015 |
| | | JP 5828872 B2 | 09/12/2015 |
| | | KR 10-0886444 B1 | 04/03/2009 |
| | | KR 10-0920710 B1 | 09/10/2009 |
| | | KR 10-2008-0043373 A | 16/05/2008 |
| | | KR 10-2008-0104050 A | 28/11/2008 |
| | | US 2007-0251572 A1 | 01/11/2007 |
| | | US 2013-0011596 A1 | 10/01/2013 |
| | | US 2013-0011649 A1 | 10/01/2013 |
| | | US 2013-0017351 A1 | 17/01/2013 |
| | | US 2013-0017379 A1 | 17/01/2013 |
| | | US 2016-0060407 A1 | 03/03/2016 |
| | | US 2016-0060443 A1 | 03/03/2016 |

Form PCT/ISA/210 (patent family annex) (January 2015)

INTERNATIONAL SEARCH REPORT
Information on patent family members

International application No.

**PCT/KR2020/002656**

| Patent document cited in search report | Publication date | Patent family member | Publication date |
|---|---|---|---|
| | | US 2016-0122492 A1 | 05/05/2016 |
| | | US 8338697 B2 | 25/12/2012 |
| | | US 8592674 B2 | 26/11/2013 |
| | | US 8946543 B2 | 03/02/2015 |
| | | US 8962974 B2 | 24/02/2015 |
| | | US 9217078 B2 | 22/12/2015 |
| | | US 9908983 B2 | 06/03/2018 |
| | | US 9963567 B2 | 08/05/2018 |
| | | US 9969853 B2 | 15/05/2018 |
| | | WO 2006-057361 A1 | 01/06/2006 |
| KR 10-2012-0061980 A | 13/06/2012 | CN 102597098 A | 18/07/2012 |
| | | EP 2316882 A1 | 04/05/2011 |
| | | EP 2493977 A1 | 05/09/2012 |
| | | US 2012-0214947 A1 | 23/08/2012 |
| | | US 8680207 B2 | 25/03/2014 |
| | | WO 2011-050926 A1 | 05/05/2011 |

Form PCT/ISA/210 (patent family annex) (January 2015)